# EUROPÄISCHE PATENTANMELDUNG

(11) **EP 4 614 887 A1**
(43) Veröffentlichungstag der Anmeldung: **10.09.2025**
(21) Anmeldenummer: 24161148.2
(22) Anmeldetag: 04.03.2024
(51) Int. Cl.: H04L 12/46, H04L 12/28

(54) **HUB FÜR EIN NETZWERK ZUR GEBÄUDEAUTOMATION, NETZWERK ZUR GEBÄUDEAUTOMATION, VERFAHREN FÜR EIN NETZWERK ZUR GEBÄUDEAUTOMATION**

(71) Anmelder: Fraport AG Frankfurt Airport Services Worldwide, 60547 Frankfurt am Main (DE)
(72) Erfinder: Thomanek, Stefan, 63452 Hanau (DE)
(74) Vertreter: Herrmann, Daniel

(57) **Zusammenfassung**

Ein erster Hub für ein Netzwerk zur Gebäudeautomation, insbesondere ein BACnet/SC Netzwerk, wobei der erste Hub erste Informationen zu ersten Nodes eines ersten Subnetzwerks in dem Netzwerk umfasst, die mit dem ersten Hub in Kommunikationsverbindung stehen; dadurch gekennzeichnet, dass der erste Hub zweite Informationen zu zweiten Nodes eines zweiten Subnetzwerks in dem Netzwerk umfasst, die mit einem zweiten Hub in Kommunikationsverbindung stehen.

## Beschreibung

Die Erfindung betrifft einen Hub für ein Netzwerk zur Gebäudeautomation, ein Netzwerk zur Gebäudeautomation sowie ein Verfahren für ein Netzwerk zur Gebäudeautomation, wobei das Netzwerk zur Gebäudeautomation vorzugsweise ein BACnet/SC Netzwerk (Building Automation and Control Networks / Secure Connect) ist.

### Hintergrund

Gebäude werden in der IPC-Klasse E04, insbesondere E04H, klassifiziert.

Ein Netzwerk zur Gebäudeautomation, ist ein Netzwerk, welches eine Kommunikation von verschiedenen Teilnehmern in dem Netzwerk miteinander ermöglicht. Ein BACnet/SC Netzwerk ist ein Beispiel für ein Netzwerk zur Gebäudeautomation und wird durch den Standard ISO 16484-5:2022, Systeme der Gebäudeautomation - Teil 5: Datenkommunikationsprotokoll, vorgegeben. Ein solches Netzwerk verfügt über eine Vielzahl von Teilnehmern, die miteinander in Kommunikationsverbindung stehen, um Daten untereinander auszutauschen. Ein Vorteil des BACnet/SC Standards ist, dass die Teilnehmer verschlüsselt miteinander kommunizieren können, um so die Sicherheit der Datenkommunikation zu erhöhen.

Im Allgemeinen weist ein BACnet/SC Netzwerk einen einzelnen zentralen Hub auf, der die Kommunikation zwischen den Teilnehmern, sog. Nodes, in dem Netzwerk steuert. Alle Nodes in dem Netzwerk sind einfache Teilnehmer des Netzwerks, die zu dem zentralen Hub über sog. Spokes kommunizieren. Der zentrale Hub fungiert dabei als Mittler zwischen den Nodes. Der zentrale Hub empfängt Nachrichten, wie Anfragen oder Antworten, von einzelnen Nodes und leitet diese an weitere Nodes in dem Netzwerk weiter um so ein Verbindung zur Datenkommunikation zwischen den einzelnen Nodes in dem Netzwerk herzustellen. Dazu sind in dem zentralen Hub Informationen zu den einzelnen Nodes in dem Netzwerk hinterlegt. Die Informationen bestehen im Allgemeinen aus Informationen über Adressen der einzelnen Teilnehmern in dem Netzwerk. Anhand dieser Informationen leitet der Hub entsprechende Anfragen und Antworten zwischen den Nodes in dem Netzwerk weiter.

Damit sich eine Node in dem Netzwerk mit einer anderen Node in dem Netzwerk verbinden kann, sendet eine Node eine Anfrage, beispielsweise eine "who-is" oder "who-has" Anfrage, an den zentralen Hub, der die Anfrage an weitere Nodes in dem Netzwerk weiterleitet. Durch die weiteren Nodes in dem Netzwerk wird die Anfrage verarbeitet. Falls es sich bei einer der weiteren Nodes um die angefragte Node handelt, sendet diese Node in Reaktion auf die Anfrage eine Antwort, beispielsweise eine "I-am" oder "I-have" Antwort zu dem zentralen Hub, der die Antwort an die anfragende Node in dem Netzwerk weiterleitet. Eine solche Antwort beinhaltet für gewöhnlich einen Hinweis auf eine Adresse der antwortenden Node. Basierend auf der Antwort kann zwischen der anfragenden Node und der antwortenden Node eine stehende Kommunikationsverbindung zum Datenaustausch zwischen der anfragenden und der antwortenden Node hergestellt werden, sodass insbesondere verschlüsselte Daten zwischen den entsprechenden Nodes ausgetauscht werden können.

Es hat sich allerdings gezeigt, dass ein solches BACnet/SC Netzwerk Schwachstellen hinsichtlich einer Hochskalierung der Nodes in dem Netzwerk aufweist. So nimmt bei einer Vergrößerung der Anzahl der Teilnehmer in dem Netzwerk die innerhalb des Netzwerks zu verarbeitende Datenmenge überproportional zu. Wenn beispielsweise jede Node in dem Netzwerk entsprechende Anfragen bzw. Antworten sendet, müssen die entsprechenden Daten dazu innerhalb des Netzwerks bei vorgegebene Bandbreite, limitierter Kapazität des zentralen Hubs sowie limitierter Kapazität der einzelnen Nodes zur Verarbeitung der Anfragen verarbeitet werden.

Dadurch kann eine Vergrößerung der Anzahl von miteinander kommunizierenden Teilnehmern in dem Netzwerk zu einer Überlastung der Kapazität des Netzwerkes, d.h. der einzelnen Nodes, der Kommunikationsverbindungen und dem Hub, führen. Damit verbunden ist ein erhöhter Wartungsaufwand, Verzögerungen beim Datenaustausch, sowie erhöhte Anforderungen an die Hardware der Netzwerkkomponenten.

Ein Lösungsansatz für die bei einer Hochskalierung der Teilnehmer in dem Netzwerk auftretenden Probleme bestand bislang darin, die Leistung von Hardwarekomponenten in dem Netzwerk zu erhöhen, sodass diese beispielsweise durch höhere Rechenleistungen dazu in der Lage sind, größere Datenmengen zu verarbeiten. Das führt allerdings dazu, dass die Kosten für die einzelnen Komponenten dem Netzwerk zunehmen. Außerdem handelt es sich bei den Nodes häufig um elektronische Komponenten von Drittanbietern, die vorgegebene Hardwarekomponenten aufweisen und nicht modifiziert werden können.

Ein weiterer bestehender Lösungsansatz für die bei einer Hochskalierung der Teilnehmer in dem Netzwerk auftretenden Probleme besteht darin, direkte Verbindungen zwischen einzelnen Nodes vorzusehen, sodass eine Kommunikation der Nodes nicht mehr zwangsläufig über den zentralen Hub geleitet wird und an weitere unbeteiligte Nodes in dem Netzwerk weitergeleitet wird, die die Anfragen jeweils verarbeiten müssen. Allerdings setzt dieser Ansatz voraus, dass eine Node, die sich mit einer anderen Node verbinden möchte, die jeweilige Adresse der anderen Node in dem Netzwerk vorab kennt. Die entsprechenden Adressen der infrage kommenden Nodes können beispielsweise in einer Node manuell vorprogrammiert werden. Dieser Lösungsansatz weist allerdings den Nachteil auf, dass entsprechende Verbindungsdaten, wie etwa Adressen, in den jeweiligen Nodes manuell eingepflegt werden müssen, was zu einem erheblichen Verwaltungsaufwand in dem Netzwerk führt. Insbesondere, wenn das Netzwerk eine Vielzahl von Teilnehmern aufweist, die häufig ausgetauscht werden und die mitunter schwer zugänglich in dem Gebäude positioniert sind.

Insofern haben sich bislang bestehende Lösungsansätze für eine Hochskalierung der Teilnehmer in einem Netzwerk als nicht ausreichend erwiesen.

### Zusammenfassung

Vor diesem Hintergrund liegt der Erfindung die Aufgabe zugrunde, Mittel bereitzustellen, die es ermöglichen, ein Netzwerk zur Gebäudeautomation, insbesondere ein BACnet/SC Netzwerk, effizient hochskalierbar zu gestalten.

Die Aufgabe wird gelöst durch einen ersten Hub für ein Netzwerk zur Gebäudeautomation, insbesondere ein BACnet/SC Netzwerk, wobei der erste Hub erste Informationen zu ersten Nodes eines ersten Subnetzwerks in dem Netzwerk umfasst, die mit dem ersten Hub in Kommunikationsverbindung stehen. Der erste Hub ist dadurch gekennzeichnet, dass der erste Hub zweite Informationen zu zweiten Nodes eines zweiten Subnetzwerks in dem Netzwerk umfasst, die mit einem zweiten Hub in Kommunikationsverbindung stehen.

Die Erfindung beruht auf der Idee der Erfinder ein herkömmliches Netzwerk zur Gebäudeautomation, insbesondere ein herkömmliches BACnet/SC Netzwerk in einzelne Subnetzwerke aufzuteilen. Ein einzelnes Subnetzwerk umfasst jeweils einen für das entsprechende Subnetzwerk zentralen Hub sowie eine Vielzahl von Nodes, die dem entsprechenden Hub zugeordnet sind und mit diesem in Kommunikationsverbindung stehen. Innerhalb des entsprechenden Subnetzwerks hat ein Hub die gleiche Funktion wie der zentrale Hub in einem herkömmlichen BAcnet/SC Netzwerk. Insbesondere hat ein erfindungsgemäßer Hub die Funktion Anfragen oder Antworten von ihm zugeordneten Nodes in dem entsprechenden Subnetzwerk zu empfangen und weiterzuleiten. Ein solcher Hub eines Subnetzwerks kann auch als BACnet/SC Hub aufgefasst werden, der für das Subnetzwerk dem herkömmlichen zentralen Hub gemäß des BACnet/SC Protokolls entspricht. Insofern weist ein durch die Vorliegende Erfindung realisierbares Netzwerk anstelle eines einzelnen für das Netzwerk zentralen Hubs mehrere zentrale Hubs auf, wobei jeweils ein erfindungsgemäßer Hub zentral für ein entsprechendes Subnetzwerk des Netzwerks ist. Es sei angemerkt, dass ein Subnetzwerk vorzugsweise nur einen einzelnen Hub aufweist. So kann das erste Subnetzwerk nur einen ersten Hub aufweisen.

Beispielsweise kann ein so gebildetes Netzwerk ein erstes Subnetzwerk aufweisen, welches einen ersten Hub und erste Nodes in dem Netzwerk umfasst, die dem ersten Hub zugeordnet sind und mit diesem in Kommunikationsverbindung stehen, sowie ein zweites Subnetzwerk, welches einen zweiten Hub und zweite Nodes in dem Netzwerk umfasst, die dem zweiten Hub zugeordnet sind und mit dem zweiten Hub in Kommunikationsverbindung stehen.

Der erste Hub kann mit dem zweiten Hub in dem Netzwerk kommunizieren. Insbesondere kann der erste Hub Anfragen oder Antworten aus dem ihm zugeordneten Subnetzwerk an den zweiten Hub weiterleiten.

Das wird dadurch realisiert, dass der erste Hub des ersten Subnetzwerks Informationen zu den ersten Nodes in dem ersten Subnetzwerk umfasst und zusätzlich Informationen zu den zweiten Nodes in dem zweiten Subnetzwerk umfasst. Anhand der zweiten Informationen zu den zweiten Nodes in dem zweiten Subnetzwerk kann der erste Hub in dem ersten Subnetzwerk Anfragen oder Antworten aus dem ersten Subnetzwerk an das zweite Subnetzwerk weiterleiten. Damit wird eine Kommunikation zwischen den einzelnen Nodes der Subnetzwerke ermöglicht.

Durch die Aufteilung des zentralen Netzwerks in einzelne Subnetzwerke kann die über einen einzelnen Hub laufende Datenmenge reduziert werden, wodurch es ermöglicht wird, die Anzahl an Nodes in dem Netzwerk hochzuskalieren, ohne dass bei gleichbleibenden sonstigen Komponenten in dem Netzwerk die Kommunikation der Nodes beeinträchtigt wird, beispielsweise durch Überlastung des zentralen Hubs.

Insbesondere werden so auch die Systemanforderungen an das Netzwerk bzw. die Komponenten dessen reduziert, wodurch ein Netzwerk günstiger realisiert werden kann.

Darüber hinaus wird so eine erhöhte Ausfallsicherung bereitgestellt. Wenn beispielsweise ein Hub oder eine Verbindung in dem Netzwerk ausfällt, bleiben die übrigen Subnetzwerke einsatzbereit, ohne dass die Kommunikation in dem Netzwerk als solches zusammenbricht, wie es einem herkömmlichen Netzwerk der Fall wäre.

Im Folgenden werden weitere Aspekte der Erfindung bereitgestellt.

In einem weiteren Aspekt ist der erste Hub ausgelegt, mit dem zweiten Hub unmittelbar zu kommunizieren. Anders ausgedrückt kann der erste Hub direkt mit dem zweiten Hub vorzugsweise über eine direkte Hub-zu-Hub Verbindung kommunizieren. Insofern besteht eine direkte Kommunikationsverbindung zwischen dem ersten und dem zweiten Hub. Der Begriff unmittelbar, kann demnach so verstanden werden, dass kein weiterer Hub zwischen den ersten und dem zweiten Hub zwischengeschaltet ist. Die einzelnen Hubs der Subnetzwerke können über ein sog. Backbone Netzwerk miteinander verbunden sein. Der erste Hub und der zweite Hub können mit einer verschlüsselten bidirektionalen Hub-zu-Hub Verbindung miteinander kommunizieren. Damit wird eine Kommunikation des ersten Hubs mit dem zweiten Hub gewährleistet, insbesondere zum Herstellen einer Kommunikationsverbindung zwischen den Nodes in unterschiedlichen Subnetzwerken aber um zusätzlich Informationen zu den dem jeweiligen Hub zugeordneten Nodes auszutauschen.

In einem weiteren Aspekt ist der erste Hub ausgelegt, von dem zweiten Hub die zweiten Informationen zu empfangen. Dadurch können die zweiten Informationen zu den zweiten Nodes in dem zweiten Netzwerk dem ersten Hub zugeführt werden. Die in dem ersten Hub hinterlegten zweiten Informationen können beispielsweise so aktualisiert werden, vorzugsweise wenn sich eine Zusammenstellung der zweiten Nodes in dem zweiten Subnetzwerk ändert und/oder in vorgegebenen zeitlichen Abständen. Insofern sind die einzelnen Subnetzwerke kontinuierlich auf dem aktuellen Stand hinsichtlich der den einzelnen Subnetzwerken zugeordneten Nodes. Dadurch müssen die Informationen in den einzelnen Hubs nicht bei Veränderung einer der Nodes in einem anderen Subnetzwerk verändert werden.

Analog kann in einem weiteren Aspekt der erste Hub ausgelegt sein, die ersten Informationen an den zweiten Hub zu senden. Insbesondere kann der erste Hub ausgelegt sein, die ersten Informationen an den zweiten Hub zu senden, wenn sich eine Änderung der ersten Nodes ergibt und/oder in zeitlich vorbestimmten Abständen.

In einem Aspekt ist der erste Hub ausgelegt, von einer ersten Node des ersten Subnetzwerks eine Verbindungsanfrage, sich mit einer zweiten Node des zweiten Subnetzwerks zu verbinden, zu empfangen und die Anfrage anhand der zweiten Informationen an den zweiten Hub weiterzuleiten. Eine Verbindungsanfrage kann beispielsweise eine "who-is" oder "who-has" Anfrage umfassen. Eine erste Node sendet die Anfrage an den ersten Hub. Der erste Hub identifiziert anhand der darin hinterlegten ersten und zweiten Informationen, dass die entsprechende zweite Node teil des zweiten Subnetzwerks ist und leitet die Anfrage an den zweiten Hub in dem zweiten Subnetzwerk weiter, um die Anfrage darin an die entsprechende zweite Node weiterzuleiten. Somit kann eine Verbindung zwischen einer ersten Node in dem ersten Subnetzwerk und einer zweiten Node in dem zweiten Subnetzwerk hergestellt werden. Zusätzlich kann der erste Hub die Anfrage anhand der ersten Informationen an weitere erste Nodes in dem ersten Subnetzwerk weiterleiten, um so ein Verbindung zwischen ersten Nodes in dem ersten Subnetzwerk herzustellen.

In einem weiteren Aspekt ist der erste Hub ausgelegt, von dem zweiten Hub eine Verbindungsanfrage einer zweiten Node, sich mit einer ersten Node zu verbinden, zu empfangen und anhand der ersten Informationen an die erste Node weiterzuleiten. Damit kann eine Verbindung zwischen einer zweiten Node in dem zweiten Subnetzwerk mit einer ersten Node in dem ersten Subnetzwerk hergestellt werden. Eine Verbindungsanfrage kann beispielsweise eine "who-is" oder "who-has" Anfrage umfassen.

In einem weiteren Aspekt umfassen die ersten Informationen für jede erste Node ersten Subnetzwerks eine Zuordnung der jeweiligen ersten Node zu einer für die jeweilige erste Node spezifischen Adresse und eine Zuordnung der jeweiligen ersten Node zu dem ersten Hub, und die zweiten Informationen umfassen für jede zweite Node des zweiten Subnetzwerks eine Zuordnung der jeweiligen zweiten Node zu einer für die jeweilige zweite Node spezifischen Adresse und eine Zuordnung der jeweiligen zweiten Node zu dem zweiten Hub.

Die für die jeweiligen Nodes spezifischen Adressen können beispielsweise VMAC Adressen der jeweiligen Nodes sein. Damit ist in dem ersten Hub eine Identifikation der ersten Nodes mit einer Zuordnung der ersten Nodes zu dem ersten Hub hinterlegt sowie eine Identifikation der zweiten Nodes mit einer Zuordnung der zweiten Nodes zu dem zweiten Hub. Somit kann eine Anfrage aus dem ersten Subnetzwerk durch den ersten Hub an den zweiten Hub in dem zweiten Subnetzwerk und den damit verknüpften Nodes weitergeleitet werden.

In einem weiteren Aspekt ist der erste Hub ausgelegt, von einer ersten Node eine Anfrage, sich mit einer weiteren ersten Node oder einer zweiten Node zu verbinden, zu empfangen und basierend auf einer Auswahlregel eine Antwort auf die Anfrage mit einer Identifikation der weiteren ersten Node oder der zweiten Node an die erste Node zu senden.

Durch den zuvor genannten Aspekt kann die zu übertragende Datenmenge in dem Netzwerk für Verbindungen erheblich reduziert werden. Für gewöhnlich sendet einen Node eine Anfrage, sich mit einer anderen Node zu verbinden, an den Hub, der die Anfrage an die weiteren Nodes in dem Netzwerk weiterleitet. Die Anfrage wird von den weiteren Nodes in dem Netzwerk verarbeitet und es wird gegebenenfalls eine Antwort an die anfragenden Node gesendet. Bei einer Vielzahl von Nodes in dem Netzwerk, die Anfragen bzw. Antworten tätigen und die Anfragen verarbeiten müssen, nimmt die dadurch verursachte Datenmenge in dem Netzwerk überproportional zu. Da die Anfragen gemäß der vorliegenden Auswahlregel nicht zwangsläufig an jede Node in dem Netzwerk weitergeleitet werden, kann die übertragende Datenmenge in dem Netzwerk reduziert werden. Darüber hinaus ist ein Senden einer Antwort an die anfragenden Node für zumindest einige Nodes nicht mehr notwendig. Somit kann die Datenmenge in dem Netzwerk zusätzlich reduziert werden. Die Auswahlregel kann beispielsweise in einem Cache einer Hardwarekomponente in Verbindung mit dem ersten Hub zwischengespeichert werden.

In einem Aspekt ist die Auswahlregel bestimmt durch eine zu der Anfrage vorangegangenen Verbindung der ersten Node mit der weiteren ersten Node oder mit der zweiten Node. Beispielsweise können die Adressen von weiteren ersten Nodes oder zweiten Nodes, mit denen die anfragende erste Node bereits zuvor ein Verbindung eingegangen ist, zwischengespeichert werden. Damit muss nicht wiederholt eine Anfrage zu bereits eingegangenen Verbindungen gesandt werden.

In einem weiteren Aspekt ist die Auswahlregel zusätzlich oder alleingestellt bestimmt durch eine vorbestimmte Angabe, ob die erste Node mit der weiteren ersten Node oder der zweiten Node kommunizieren darf. Beispielsweise kann durch die Auswahlregel angegeben werden, dass sich eine entsprechende erste Node nur mit ausgewählten weiteren ersten oder ausgewählten zweiten Nodes verbinden darf. Damit müssen keine Anfragen an Nodes gesandt werden, die sich ersichtlich nicht mit der anfragenden Nodes verbinden sollen.

Weiterhin wird die zuvor genannte Aufgabe gelöst durch ein Netzwerk zur Gebäudeautomation, insbesondere ein BACnet/SC Netzwerk, umfassend: ein erstes Subnetzwerk, umfassend den zuvor beschriebenen ersten Hub, der mit den ersten Nodes des ersten Subnetzwerks in Kommunikationsverbindung steht; und ein zweites Subnetzwerk, umfassend den zweiten Hub, der mit den zweiten Nodes des zweiten Subnetzwerks in Kommunikationsverbindung steht und die ersten und zweiten Informationen umfasst. Der erste und der zweite Hub können über eine direkte Hub-zu-Hub bidirektionale Verbindung miteinander kommunizieren. Die Verbindung zwischen den Hubs kann verschlüsselt sein.

Der erste Hub und der zweite Hub können innerhalb des Subnetzwerkers eine gleiche Funktionalität aufweisen. In dem ersten Subnetzwerk sind die ersten Nodes dem ersten Hub zugeordnet. In dem zweiten Subnetzwerk sind die zweiten Nodes dem zweiten Hub zugeordnet. Der erste Hub und der zweite Hub können identisch ausgebildet sein.

Innerhalb des ersten Subnetzwerks fungiert der erste Hub als Mittler für die ersten Nodes. Der erste Hub ist ausgelegt Nachrichten von den ersten Nodes zu empfangen und innerhalb des ersten Subnetzwerks an diese weiterzuleiten. Ferner ist der erste Hub ausgelegt Nachrichten von den ersten Nodes zu empfangen und an den zweiten Hub basierend auf den zweiten Informationen weiterzuleiten. Darüber hinaus ist der erste Hub ausgelegt Nachrichten von dem zweiten Hub zu empfangen und an die ersten Nodes weiterzuleiten.

Analog dazu fungiert fungiert der zweite Hub als Mittler für die zweiten Nodes innerhalb des zweiten Subnetzwerkes. Der zweite Hub ist ausgelegt, Nachrichten von den zweiten Nodes zu empfangen und innerhalb des zweiten Subnetzwerks an diese weiterzuleiten. Ferner ist der erste Hub ausgelegt Nachrichten von den zweiten Nodes zu empfangen und an den ersten Hub basierend auf den ersten Informationen weiterzuleiten. Darüber hinaus ist der zweite Hub ausgelegt, Nachrichten von dem ersten Hub zu empfangen und an die zweiten Nodes weiterzuleiten.

Dadurch ist ein Netzwerk geschaffen, welches die Eingangs genannte Aufgabe löst, und insbesondere bei gleichbleibenden sonstigen Komponenten in dem Netzwerk hochskaliert werden kann, ohne dass die Kommunikation der Nodes beeinträchtigt wird, welches durch verringerte Hardwareanforderungen günstig zu realisieren ist und welches eine erhöhte Ausfallsicherung aufweist.

In einem Aspekt stehen der erste Hub und der zweite Hub in unmittelbarer Kommunikationsverbindung insbesondere über eine bidirektionale direkte Hub-zu-Hub Verbindung. Die Kommunikationsverbindung kann beispielsweise eine BUS-Verbindung sein. Die Kommunikationsverbindung kann beispielsweise eine Backbone Verbindung sein, die mehr als zwei Hubs miteinander verbindet. Darüber wird ein Datenaustausch zwischen dem ersten und zweiten Hub ermöglicht. Der Datenaustausch kann dadurch gebildet sein, dass der erste Hub die ersten Informationen zu den ihm zugeordneten ersten Nodes an den zweiten Hub sendet und der zweite Hub die zweiten Informationen zu den ihm zugeordneten zweiten Nodes an den ersten Hub sendet. Beispielsweise besteht eine direkte Verbindung, wie eine Websocket Verbindung zwischen der ersten Node und dem ersten Hub. Über die direkte Verbindung werden Daten, wie etwa Anfragen oder Antworten, von der ersten Node an den ersten Hub gesandt. Der erste Hub leitet die Daten über die Hub-zu-Hub Verbindung an den zweiten Hub anhand der zweiten Informationen weiter. Der zweite Hub leitet die Daten an anhand der zweiten Informationen über eine direkte Verbindung zwischen dem zweiten Hub und einer zweiten Node an die zweite Node weiter. Auf diesem Wege können Daten von einer ersten Node in dem ersten Subnetzwerk an eine zweiten Node in dem zweiten Subnetzwerk gesandt werden.

In einem Aspekt sind der erste Hub und der zweite Hub ausgelegt, die Informationen zu den mit dem jeweiligen Hub in Kommunikationsverbindung stehenden Nodes auszutauschen, insbesondere in zeitlich definierten Abständen und/oder wenn eine Änderung der ersten oder zweiten Nodes eintritt.

Dadurch wird sichergestellt, dass der erste Hub zusätzlich zu den ersten Informationen über die zweiten Informationen zu den dem zweiten Hub zugeordneten Nodes verfügt und der zweite Hub zusätzlich zu den zweiten Informationen über die ersten Informationen zu den dem ersten Hub zugeordneten ersten Nodes verfügt. Wenn sich beispielsweise eine Änderung der ersten oder der zweiten Nodes eintritt, können die entsprechenden Informationen in dem Hub des jeweils anderen Subnetzwerks aktualisiert werden. Dadurch muss eine Änderung der Nodes nicht umständlich in anderen Nodes bzw. anderen Hub ein gepflegt werden. Ferner können die Hubs die ersten bzw. die zweiten Informationen zu den mit dem jeweiligen Hubs verbundenen Nodes in zeitlich vor definierten Abständen austauschen, sodass die Informationen zu den Nodes in den jeweiligen Netzwerk jedem Hub aktuell sind.

In einem Aspekt umfasst das Netzwerk einen Switch Hub, der mit den ersten Nodes des ersten Subnetzwerks und mit den zweiten Nodes des zweiten Subnetzwerks in Kommunikationsverbindung steht und mit dem ersten und zweiten Hub in Kommunikationsverbindung steht, wobei in dem Switch Hub eine Zuordnung der ersten Nodes zu dem ersten Hub und der zweiten Nodes zu dem zweiten Hub hinterlegt ist.

Durch den Switch Hub wird die Kommunikation der Nodes mit dem der jeweiligen Node zugordneten Hub realisiert. Mit anderen Worten ist der Switch Hub zwischen den ersten und zweiten Nodes und dem ersten und zweiten Hub zwischengeschaltet. Der Switch Hub fungiert als Mittler zwischen den ersten und zweiten Nodes und den jeweiligen ersten und zweiten Hub. Nachrichten, wie Anfragen, von den jeweiligen ersten und/oder zweiten Nodes werden über den Switch Hub an den jeweiligen Hub gesendet. Der Switch Hub leitet die Nachrichten basierend auf der Zuordnung an den der jeweiligen Node zugeordneten Hub weiter. Andersherum, senden der erste und oder der zweite Hub Nachrichten über den Switch Hub an die jeweilige Node..

Insofern ist der Switch Hub ausgelegt anhand der Zuordnung Anfragen und/oder Antworten der ersten Nodes an den ersten Hub weiterzuleiten und Anfragen und/oder Antworten der zweiten Nodes an den zweiten Hub weiterzuleiten.

Da die Zuordnung an einer zentralen Stelle, i.e. dem Switch Hub, hinterlegt ist, ist es ausreichend, dass die Zuordnung bei einer Änderung der Nodes angepasst wird. Dadurch wird der Wartungs- und Instandhaltungsaufwand des Netzwerks reduziert. Beispielsweise ist es so nicht mehr notwendig andere Komponenten in dem Netzwerk bei einer Änderung der Nodes anzupassen. So kann der Switch Hub an einer leicht zugängigen Stelle in dem Netzwerk positioniert sein.

In einem Aspekt kann die Zuordnung beispielsweise dadurch realisiert werden, dass die Zuordnung eine Verknüpfung einer nodespezifischen Adresse der jeweiligen Nodes zu einem der jeweiligen Node zugeordneten ersten oder zweiten Hub umfasst.

In einem Aspekt umfasst das Netzwerk ferner einen dritten Hub, der mit dem Switch Hub und dem ersten und dem zweiten Hub in Kommunikationsverbindung steht, wobei der Switch Hub ausgelegt ist, Anfragen an den dritten Hub anstelle des ersten oder des zweiten Hubs weiterzuleiten, wenn der erste oder der zweite Hub ausfallen.

Durch den dritten Hub wir eine Ausfallsicherheit bereitgestellt. Der dritte Hub kann analog zu dem ersten und dem zweiten Hub ausgebildet sind. Falls der erste oder der zweite Hub ausfällt, übernimmt der dritte Hub die Funktonalität des ausgefallenen Hubs.

In einem Aspekt umfasst der dritte Hub ersten und die zweiten Informationen. Der erste Hub kann ausgelegt sein, die ersten Informationen zu den ihm zugeordneten ersten Nodes an den dritten Hub zu senden. Der zweite Hub kann ausgelegt sein die zweiten Informationen zu den ihm zugeordneten zweiten Nodes an den dritten Hub zu senden. Somit wird es dem dritten Hub ermöglicht, bei einem Ausfall anstelle des ersten oder des zweiten Hubs zu treten.

In einem Aspekt umfasst das Netzwerk einen failover switch hub als Redundanz zu dem Switch Hub. Dadurch wird eine Ausfallsicherung gewährleistet, falls der Switch Hub ausfallen sollte.

Darüber hinaus wird die eingangs genannte Aufgabe gelöst durch ein Verfahren für ein Netzwerk zur Gebäudeautomation, insbesondere ein BACnet/SC Netzwerk, mit einem ersten Hub umfassend erste Informationen zu ersten Nodes eines ersten Subnetzwerks in dem Netzwerk, die mit dem ersten Hub in Kommunikationsverbindung stehen. Das Verfahren ist dadurch gekennzeichnet, dass der erste Hub von einem zweiten Hub in dem Netzwerk zweite Informationen zu zweiten Nodes eines zweites Subnetzwerks in dem Netzwerk, die mit einem zweiten Hub in Kommunikationsverbindung stehen, empfängt.

Weiterhin kann der erste Hub die ersten Informationen an den zweiten Hub senden. Der erste Hub und der zweite Hub stehen somit im Austausch zu dem jeweiligen Hub zugeordneten Nodes.

Ein Datenaustausch zwischen einer ersten Node des ersten Subnetzwerks mit einer zweiten Node des zweiten Subnetzwerks kann durch die folgenden Schritte realisiert werden. Der erste Hub empfängt eine Anfrage von einer ersten Node, sich mit einer zweiten Node zu verbinden über eine direkte Verbindung, wie eine Websocket Verbindung, zwischen der ersten Node und dem ersten Hub. Anhand der zweiten Informationen leitet der erste Hub die Anfrage über die direkte Hub-zu-Hub Verbindung weiter an den zweiten Hub. Der zweite Hub leitet die Anfrage anhand der zweiten Informationen über eine direkte Verbindung, wie eine Websocket-Verbindung, zwischen dem zweiten Hub und der zweiten Node weiter an die zweite Node. Die zweite Anfrage wird durch die zweite Node verarbeitet. Falls die in der Anfrage gestellten Erfordernisse erfüllt sind, antwortet die zweite Node, wie im Folgenden beschrieben. Auf die Anfrage sendet die zweite Node eine Antwort an den der zweiten Node zugeordneten zweiten Hub über die direkte Verbindung zwischen der zweiten Node und zweitem Hub. Der zweite Hub sendet die Antwort anhand der ersten Informationen an den ersten Hub über die direkte Hub-zu-Hub Verbindung. Der erste Hub leitet die Anfrage anhand der ersten Informationen über die direkte Verbindung zwischen erster Node und erstem Hub an die erste Node weiter, welche die Anfrage ausgesendet hat. Die Antwort kann beispielsweise eine Adresse der zweiten Node enthalten. Somit können Daten zwischen der ersten Node in dem ersten Subnetzwerk und der zweiten Node in dem zweiten Subnetzwerk ausgetauscht werden.

Gemäß einem Aspekt wird eine Anfrage sich mit einer weiteren ersten Node in dem ersten Subnetzwerk oder einer zweiten Node in dem zweiten Subnetzwerk zu verbinden, von einer ersten Node an den ihr zugeordneten ersten Hub gesendet. Anhand einer Auswahlregel kann der Hub eine Antwort mit einer Adresse der weiteren ersten Node oder der zweiten Node an die erste Node senden. Die Anfrage wird somit unmittelbar vom ersten Hub verarbeitet, ohne dass die Anfrage weitergeleitet wird.

Die Auswahlregel ist beispielsweise vorgegeben durch eine vorbestimmte Angabe ob die erste Node mit weiteren ersten Node oder der zweiten Node verbinden darf. In anderen Aspekten kann die Auswahlregel bestimmt sein durch eine zu der Anfrage vorangegangenen Verbindung der ersten Node mit der weiteren ersten Node oder mit der zweiten Node. In diesem Fall kann die Antwort eine Adresse mit der zu verbindenden weiteren ersten Node oder zweiten Node enthalten.

Gemäß eine Aspekt umfasst das Netzwerk einen Switch hub, der mit den ersten Nodes und mit den zweiten Nodes in Kommunikationsverbindung steht und mit dem ersten und zweiten Hub in Kommunikationsverbindung steht, wobei das Verfahren umfasst: Empfangen, durch den Switch Hub, einer Anfrage von einer ersten Node, sich mit einer weiteren ersten Node oder einer zweiten Node zu verbinden, und Weiterleiten, durch den Switch Hub, der Anfrage an den ersten Hub anhand einer Zuordnung, welche die ersten Nodes des ersten Subnetzwerks dem ersten Hub zuordnet.

Gemäß einem Aspekt umfasst das Netzwerk einen dritten Hub, der mit dem ersten und dem zweiten Hub sowie dem Switch Hub in Kommunikationsverbindung steht, wobei das Verfahren umfasst Empfangen, durch den Switch Hub, einer Anfrage von einer ersten Node, sich mit dem einer weitern ersten Node oder einer zweiten Node zu verbinden; Weiterleiten, durch den Switch Hub, der Anfrage an den dritten Hub, falls der erste oder der zweite Hub ausfallen.

Computerprogrammprodukt umfassend Befehle, die bei der Ausführung durch eine Datenverarbeitungsvorrichtung, insbesondere den ersten Hub, diese veranlassen, die beschriebenen Verfahrensschritte auszuführen.

### Kurzbeschreibung von Ausführungsbeispielen

Im Folgenden werden weitere Ausführungsbeispiele unter Bezugnahme auf Figuren einer Zeichnung näher erläutert. Hierbei zeigen beispielhaft:
Fig. 1 eine Übersicht eines Netzwerks gemäß einem ersten Ausführungsbeispiel
Fig. 2 ein Verbindungsdiagramm für eine Verbindung einer ersten Node mit einer zweiten Node für ein Netzwerk gemäß dem ersten Ausführungsbeispiel
Fig. 3 eine Übersicht eines Netzwerks gemäß einem zweiten Ausführungsbeispiel
Fig. 4 ein Verbindungsdiagramm für eine Verbindung einer ersten Node mit einer zweiten Node für ein Netzwerk gemäß einem zweiten Ausführungsbeispiel

### Detaillierte Beschreibung

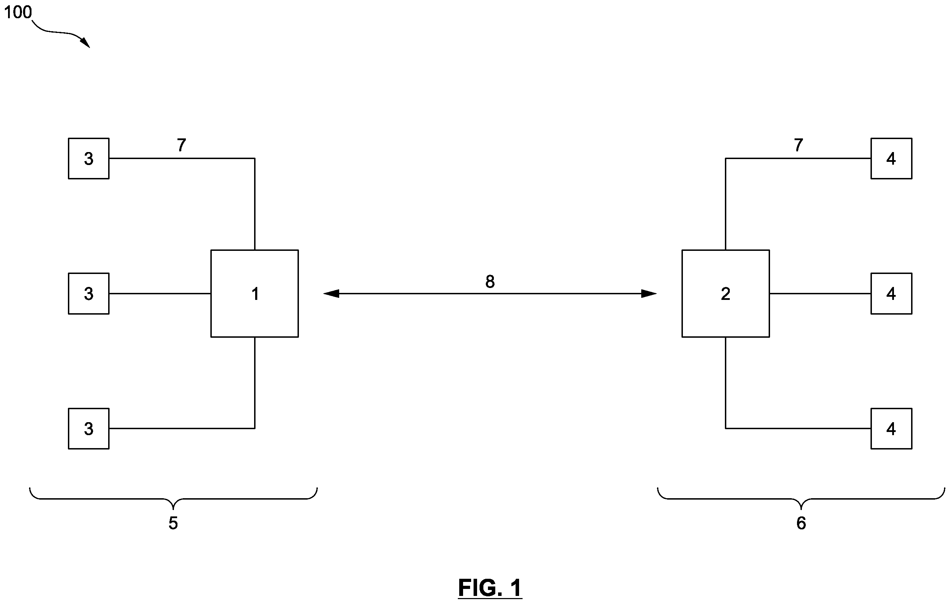

Figur 1 zeigt beispielhaft ein Netzwerk 100 zur Gebäudeautomation, insbesondere ein BACnet/SC Netzwerk. Das Netzwerk 100 umfasst eine erstes Subnetzwerk 5 und ein zweites Subnetzwerk 6. Das erste Subnetzwerk 5 wird gebildet durch erste Nodes 3 und einen ersten Hub 1. Die ersten Nodes 3 sind dem ersten Hub 1 in dem ersten Subnetzwerk 5 zugeordnet. Die ersten Nodes 3 stehen mit dem ersten Hub 1 jeweils in direkter Kommunikationsverbindung. Die Kommunikation zwischen einer ersten Node 3 und dem ersten Hub 1 erfolgt über eine stehende Websocket-Verbindung 7. Innerhalb des ersten Subnetzwerks 5 fungiert der erste Hub 1 als eine zentraler BACnet/SC Hub für das erste Subnetzwerk. Insbesondere ist der erste Hub ausgelegt, Nachrichten, wie Anfragen oder Antworten, zwischen den ersten Nodes 3 innerhalb des ersten Subnetzwerks 5 weiterzuleiten. Zum Weiterleiten von Nachrichten der ersten Nodes 3 innerhalb des ersten Subnetzwerks 5 umfasst der erste Hub 1 erste Informationen zu den ihm zugeordneten ersten Nodes 3 in dem ersten Subnetzwerk 5. Die ersten Informationen können nodespezifische Adressen für die jeweiligen ersten Nodes 3 umfassen. Eine solche Adresse kann beispielsweise eine VMAC sein.

Das zweite Subnetzwerk 6 umfasst eine Vielzahl von zweiten Nodes 6 und einen zweiten Hub 2. Die zweiten Nodes 4 sind dem zweiten Hub 2 in dem zweiten Subnetzwerk 6 zugeordnet. Die zweiten Nodes 4 stehen mit dem zweiten Hub 4 jeweils in direkter Kommunikationsverbindung. Die Kommunikation zwischen einer zweiten Node 4 und dem zweiten Hub 2 erfolgt über eine stehende Websocket-Verbindung 7. Innerhalb des zweiten Subnetzwerks 6 fungiert der zweite Hub 2 als ein zentraler BACnet/SC Hub für das zweite Subnetzwerk 6. Insbesondere ist der zweite Hub 2 ausgelegt, Nachrichten wie Anfragen oder Antworten zwischen den zweiten Nodes 4 innerhalb des zweiten Subnetzwerks 6 weiterzuleiten. Zum Weiterleiten von Nachrichten der zweiten Nodes 4 innerhalb des zweiten Subnetzwerks 6 umfasst der zweite Hub 2 zweite Informationen zu den ihm zugeordneten zweiten Nodes 4 in dem zweiten Subnetzwerk 6. Die zweiten Informationen können nodespezifische Adressen jeweiligen der zweiten Nodes 2 umfassen. Eine solche Adresse kann beispielsweise eine VMAC sein.

Darüber hinaus steht der erste Hub 1 mit dem zweiten Hub 2 in Kommunikationsverbindung, insbesondere über eine direkte Hub-zu Hub Verbindung 8. Der erste Hub 1 und der zweite Hub 2 sind ausgelegt, die ersten bzw. zweiten Informationen zu den mit dem jeweiligen Hub verbundenen Nodes 3, 4 auszutauschen. Der erste Hub 1 sendet über die Verbindung 8 die ersten Informationen zu den ihm zugeordneten ersten Nodes 3 an den zweiten Hub 2. Andersherum sendet der zweite Hub 2 über die Verbindung 8 die zweiten Informationen zu den ihm zugeordneten zweiten Nodes 4 an den ersten Hub 1.

Der erste Hub 1 verfügt somit über die ersten Informationen zu den ihm zugeordneten ersten Nodes 3 sowie über die zweiten Informationen zu den dem zweiten Hub 2 zugeordneten zweiten Nodes 4. Analog verfügt der zweite Hub 2 über die zweiten Informationen zu den ihm zugeordneten zweiten Nodes 4 sowie über die ersten Informationen zu den dem ersten Hub 1 zugeordneten ersten Nodes 3.

Im Folgenden wird beschrieben, wie eine Verbindung zwischen Nodes 3, 4 in dem Netzwerk 100 hergestellt wird.

Innerhalb eines Subnetzwerks 5, 6 wird eine Verbindung zwischen Nodes 3, 4 desselben Subnetzwerks 5, 6 analog zu dem bestehenden BACnet/SC Standard hergestellt. Beispielsweise sendet eine erste Node 3 eine Anfrage A, wie etwa eine "who-is" oder "who-has" Anfrage, an den ersten Hub 1. Der erste Hub 1 leitet die Anfrage A anhand der ersten Informationen über jeweils eine Websocket-Verbindung 7 zu den weiteren ersten Nodes 3 in dem ersten Subnetzwerk 5 weiter. Die Anfrage A wird von den weiteren ersten Nodes 3 bearbeitet. Falls eine der weiteren ersten Nodes 3 die Erfordernisse der Anfrage A erfüllt, sendet die entsprechende erste Node 3 in Reaktion auf die Anfrage eine Antwort B, wie etwa eine "I-am" oder "I-have" Antwort, über die Websocket-Verbindung 7 an den ersten Hub 1, welcher die Antwort B an die anfragende erste Node 3 weiterleitet. Die Antwort B kann beispielsweise eine spezifische Kennzeichnung der antwortenden Node, wie eine spezifische Adresse, enthalten. Somit wird innerhalb des ersten Subnetzwerks 5 eine Datenkommunikation wie zwischen der anfragenden ersten Node 3 und der weiteren antwortenden ersten Node 3 ermöglicht . Die Daten können verschlüsselt über die stehende Verbindung zwischen der anfragenden ersten Node und der antwortenden weiteren Node 3 innerhalb des ersten Subnetzwerks 5 übertragen werden.

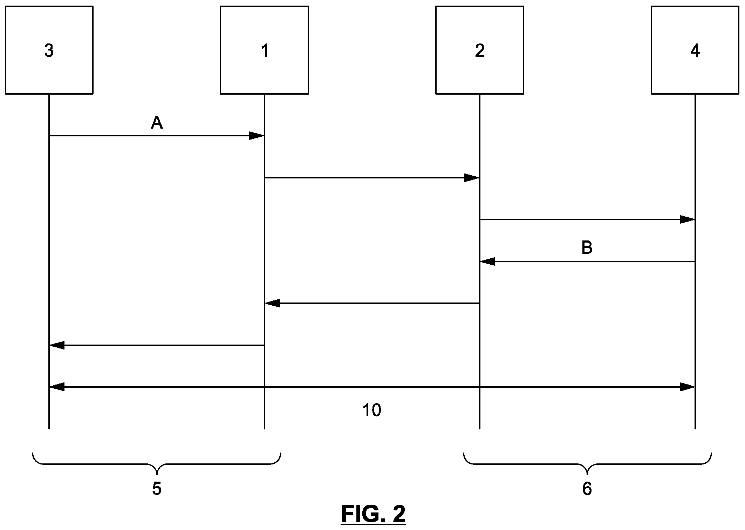

In Figur 2 ist ein Verbindungsdiagramm für eine Verbindung zwischen einer ersten Node 3 in dem ersten Subnetzwerk 5 und einer zweiten Node 4 in dem zweiten Subnetzwerk exemplarisch dargestellt.

Eine erste Node 3 sendet eine Anfrage A über die stehende Verbindung 7 an den ersten Hub 1. Der erste Hub 1 leitet die Anfrage A anhand der zweiten Informationen über die Hub-zu-Hub Verbindung 8 weiter an den zweiten Hub 2. Der zweite Hub 2 leitet die Anfrage A anhand der zweiten Informationen an die zweiten Nodes 4 in dem zweiten Subnetzwerk 6 über die stehende Websocket-Verbindung 8 weiter. Die zweiten Nodes 4 verarbeiten die Anfrage A. Falls eine zweite Node 4 die durch die Anfrage A vorgegebenen Erfordernisse erfüllt, sendet die entsprechende zweiten Node 4 in Reaktion auf die Anfrage A eine Antwort B an den zweiten Hub 2 über die stehende Verbindung 7. Der zweite Hub 2 leitet die Antwort B anhand der ersten Informationen über die Verbindung 8 weiter an den ersten Hub 1. Der erste Hub 1 leitet die Antwort B anhand der ersten Informationen über die Websocket-Verbindung weiter zu der ersten Node 3, welche die Anfrage A ausgesendet hat. Die Antwort kann eine spezifische Adresse der antwortenden zweiten Node 4 enthalten. Basierend auf der Antwort B kann ein Datenaustausch zwischen der anfragenden ersten Node 3 und der antwortenden zweiten Node 4 realisiertwerden.

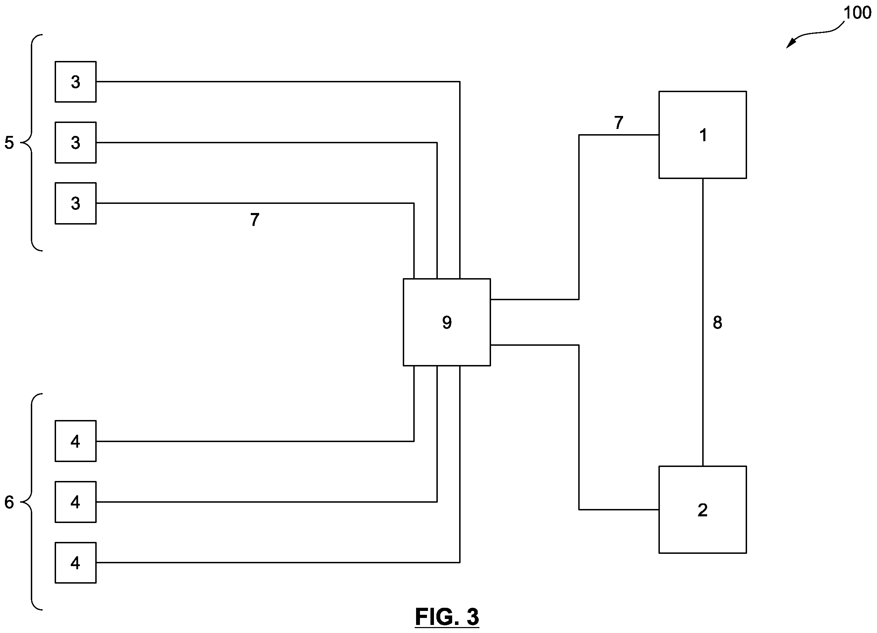

In Figur 3 ist ein weiteres Ausführungsbeispiel für ein Netzwerk 100 schematisch dargestellt. Das in Figur 3 gezeigte Netzwerk ist analog zu dem Netzwerk aus Figur 1 aufgebaut, nur dass zusätzlich ein Switch Hub 9 vorgesehen ist, der zwischen den Nodes 3, 4 und den Hubs 1, 2 zwischengeschaltet ist.

Analog zu dem in Figur 1 gezeigten Netzwerk 100, weist das in Figur 3 gezeigte Netzwerk 100 ein erstes Subnetzwerk 5, welches aus ersten Nodes 3 und einem ersten Hub 1 gebildet wird, und ein zweites Subnetzwerk 6, welches aus den zweiten Nodes 4 und dem zweiten Hub 2 gebildet wird, auf. Die ersten Nodes 3 stehen jeweils in Kommunikationsverbindung mit dem Switch Hub 9. Weiterhin stehen sowohl der erste Hub 1 als auch der zweite Hub 2 jeweils in Kommunikationsverbindung mit dem Switch Hub 9. Darüber hinaus stehen der erste und der zweite Hub 1, 2 über eine Hub-zu Hub-Verbindung 8 in Kommunikationsverbindung. Der erste Hub 1 verfügt über die ersten Informationen und über die zweiten Informationen. Der zweite Hub 2 verfügt über die zweiten Informationen und die ersten Informationen. Der erste Hub 1 und der zweite Hub 2 können die ersten bzw. die zweiten Informationen wie beschrieben miteinander über die Verbindung 8 miteinander austauschen.

Der Switch Hub 9 umfasst eine Zuordnung der ersten Nodes 3 zu dem ersten Hub 1 sowie eine Zuordnung der zweiten Nodes 4 zu dem zweiten Hub 2. Die Zuordnung kann jeweils eine nodespezifische Adresse, die den jeweiligen Hub zugeordnet ist, umfassen. Anhand der Zuordnung werden Anfragen A einer Node 3, 4 zu dem ihr zugeordneten Hub 1, 2 durch den Switch Hub 9 weitergeleitet.

Im Folgenden wird beschrieben, wie ein Datenaustausch zwischen den Nodes 3, 4 in dem in Figur 3 gezeigten Netzwerk hergestellt werden. Die Verbindungen werden dabei analog zu einer Verbindung wie vorangegangenen beschrieben hergestellt.

Innerhalb eines Subnetzwerks 5, 6 wird eine Verbindung zwischen Nodes 3, 4 desselben Subnetzwerks 5, 6 über den Hub Switch 9 und den entsprechenden Hub 1, 2 hergestellt. Beispielsweise sendet eine erste Node 3 eine Anfrage A an den Switch Hub 9, der die Anfrage A anhand der Zuordnung der ersten Node 3 zu dem ersten Hub 1 an den ersten Hub 1 weiterleitet. Innerhalb des ersten Subnetzwerks 5 leitet der erste Hub 1 die Anfrage weiter an den Hub Switch 9, der die Anfrage A an weitere erste Nodes 3 des ersten Subnetzwerks 5 weiterleitet. Die weiteren ersten Nodes 3 verarbeiten die Anfrage A und senden gegebenenfalls in Reaktion auf die Anfrage A eine Antwort B an den Hub Switch 9, der die Antwort B anhand der Zuordnung der ersten Nodes 3 zu dem ersten Hub 1 an den ersten Hub 1 weiterleitet. Der erste Hub 1 leitet dann die Antwort B an den Hub Switch 9, der die Antwort B an die anfragende erste Node 3 weiterleitet. Somit kann eine stehende Verbindung zur Datenkommunikation zwischen ersten Nodes 3 in dem ersten Subnetzwerk 5 hergestellt werden. Die ersten Nodes 3 können somit über die stehende Verbindung Daten verschlüsselt austauschen.

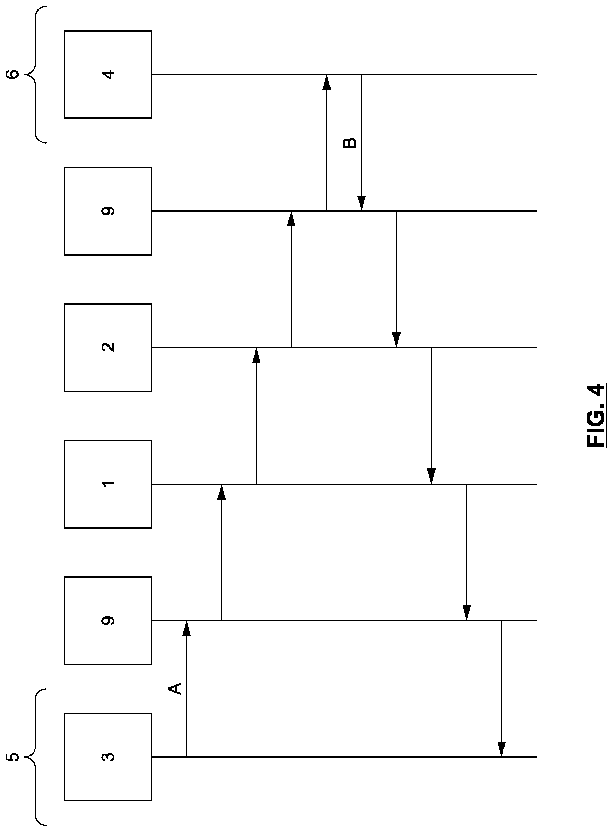

In Figur 4 ist ein Verbindungsdiagramm für eine Verbindung einer ersten Node 3 des ersten Subnetzwerks 5 mit einer zweiten Node 4 des zweiten Subnetzwerks 6 dargestellt.

Gemäß der Darstellung in Figur 4 sendet eine erste Node 3 eine Anfrage A an den Hub Switch 9. Anhand der Zuordnung der ersten Node zu dem ersten Hub 1 leitet der Hub Switch 9 die Anfrage A an den ersten Hub 1. Der erste Hub 1 leitet die Anfrage A anhand der zweiten Informationen weiter an den zweiten Hub 2. Der zweite Hub 2 leitet die Anfrage A anhand der zweiten Informationen weiter an den Hub Switch 9, welcher die Anfrage A über die Zuordnung der zweiten Nodes 4 zu dem zweiten Hub 2 an zweite Nodes 4 in dem zweiten Subnetzwerk 6 weiterleitet. Die Anfrage A wird von den zweiten Nodes 4 in dem zweiten Subnetzwerk 6 bearbeitet und gegebenenfalls sendet eine zweite Node 4 eine Antwort B in Reaktion auf die Anfrage A. Die Antwort B wird von der zweiten Node 4 an den Hub Switch 9 gesendet, welcher die Antwort B der antwortenden zweiten Node 4 anhand der Zuordnung an den zweiten Hub 2 weiterleitet. Anhand der ersten Informationen leitet der zweite Hub 2 über die Hub-zu-Hub Verbindung 8 die Antwort B weiter an den ersten Hub 1. Der erste Hub 1 leitet die Antwort B anhand der ersten Informationen weiter an den Hub Switch 9, welcher die Antwort B an die dem ersten Hub zugeordnete anfragende erste Node 3 des ersten Subnetzwerks 5 sendet. Die Antwort B kann eine für die antwortende zweiten Node 4 spezifischen Adresse umfassen. Somit kann auf Basis der Antwort B eine stehende Verbindung zwischen der anfragenden ersten Node 3 des ersten Subnetzwerks 5 und der antwortenden zweiten Node 4 des zweiten Subnetzwerks 6 hergestellt werden.

Es sei angemerkt, dass die in den Figuren gezeigten exemplarisch Anzahl von ersten und zweiten Nodes 3, 4 nicht limitiert ist. Das Netzwerk 100 kann eine davon abweichende Anzahl von ersten oder zweiten Nodes 3, 4 umfassen. Darüber hinaus kann das in den Figuren gezeigten Netzwerk mehr als zwei Hubs umfassen. Die mehr als zwei Hubs können miteinander über eine Backbone Verbindung verbunden sein. Ferner können zusätzliche Hub's vorgesehen sein, welche eine Redundanz schaffen, falls ein Hub in einem Subnetzwerk ausfällt.

### Bezugszeichenliste

- 100: Netzwerk
- 1: erster Hub
- 2: zweiter Hub
- 3: erste Nodes
- 4: zweite Nodes
- 5: erstes Subnetzwerk
- 6: zweites Subnetzwerk
- 7: Websocket Verbindung
- 8: Hub-zu-Hub Verbindung
- 9: Switch Hub
- 10: stehende Verbindung zwischen Nodes
- A: Anfrage
- B: Antwort

Weiterhin werden bevorzugte Aspekte bereitgestellt:
1. Ein erster Hub für ein Netzwerk zur Gebäudeautomation, insbesondere ein BACnet/SC Netzwerk,
   wobei der erste Hub erste Informationen zu ersten Nodes eines ersten Subnetzwerks in dem Netzwerk umfasst, die mit dem ersten Hub in Kommunikationsverbindung stehen;
   dadurch gekennzeichnet, dass
   der erste Hub zweite Informationen zu zweiten Nodes eines zweiten Subnetzwerks in dem Netzwerk umfasst, die mit einem zweiten Hub in Kommunikationsverbindung stehen.
2. Erster Hub nach Aspekt 1, dadurch gekennzeichnet, dass der erste Hub ausgelegt ist, mit dem zweiten Hub insbesondere unmittelbar zu kommunizieren.
3. Erster Hub nach einem der vorangegangenen Aspekte, dadurch gekennzeichnet, dass der erste Hub ausgelegt ist, von dem zweiten Hub die zweiten Informationen zu empfangen.
4. Erster Hub nach einem der vorangegangenen Aspekte, dadurch gekennzeichnet, dass der erste Hub ausgelegt ist, die ersten Informationen an den zweiten Hub zu senden.
*5*. Erster Hub nach einem der vorangegangenen Aspekte, dadurch gekennzeichnet, dass der erste Hub ausgelegt ist, von einer ersten Node des ersten Subnetzwerks eine Verbindungsanfrage, sich mit einer zweiten Node des zweiten Subnetzwerks zu verbinden, zu empfangen und die Anfrage anhand der zweiten Informationen an den zweiten Hub weiterzuleiten.
*6*. Erster Hub nach einem der vorangegangenen Aspekte, dadurch gekennzeichnet, dass der erste Hub ausgelegt ist, von dem zweiten Hub eine Verbindungsanfrage einer zweiten Node, sich mit einer ersten Node zu verbinden, zu empfangen und anhand der ersten Informationen an die erste Node weiterzuleiten.
*7*. Erster Hub nach einem der vorangegangenen Aspekte, dadurch gekennzeichnet,
   dass die ersten Informationen für jede erste Node des ersten Subnetzwerks eine Zuordnung der jeweiligen ersten Node zu einer für die jeweilige erste Node spezifischen Adresse umfasst und eine Zuordnung der jeweiligen ersten Node zu dem ersten Hub umfasst, und
   dass die zweiten Informationen für jede zweite Node des zweiten Subnetzwerks eine Zuordnung der jeweiligen zweiten Node zu einer für die jeweilige zweite Node spezifischen Adresse und eine Zuordnung der jeweiligen zweiten Node zu dem zweiten Hub umfasst.
8. Erster Hub nach einem der vorangegangenen Aspekte, dadurch gekennzeichnet, dass der erste Hub ausgelegt ist, von einer ersten Node eine Anfrage, sich mit einer weiteren ersten Node oder einer zweiten Node zu verbinden, zu empfangen und basierend auf einer Auswahlregel eine Antwort auf die Anfrage mit einer Identifikation der weiteren ersten Node oder der zweiten Node an die erste Node zu senden.
9. Erster Hub nach Aspekt 8, wobei die Auswahlregel bestimmt ist durch eine zu der Anfrage vorangegangenen Verbindung der ersten Node mit der weiteren ersten Node oder mit der zweiten Node.
10. Erste Hub nach einem der Aspekte 8 oder 9, wobei die Auswahlregel bestimmt ist durch eine vorbestimmte Angabe, ob die erste Node mit der weiteren ersten Node oder der zweiten Node kommunizieren darf.
11. Netzwerk zur Gebäudeautomation, insbesondere ein BACnet/SC Netzwerk, umfassend:
   ein erstes Subnetzwerk, umfassend
      den ersten Hub nach einem der vorangegangenen Aspekte, der mit den ersten Nodes in Kommunikationsverbindung steht; und
   ein zweites Subnetzwerk, umfassend
      den zweiten Hub, der mit den zweiten Nodes in Kommunikationsverbindung steht und die ersten und zweiten Informationen umfasst.
12. Netzwerk nach Aspekt 11, dadurch gekennzeichnet, dass der erste Hub und der zweite Hub in unmittelbarer Kommunikationsverbindung stehen, insbesondere über eine bidirektionale direkte Hub-zu-Hub Verbindung.
13. Netzwerk nach Aspekten 11 - 12, dadurch gekennzeichnet, dass der erste Hub und der zweite Hub ausgelegt sind, die Informationen zu den mit dem jeweiligen ersten oder zweiten Hub in Kommunikationsverbindung stehenden ersten oder zweiten Nodes auszutauschen, insbesondere in zeitlich definierten Abständen und/oder wenn eine Änderung der ersten oder zweiten Nodes eintritt.
14. Netzwerk nach einem der Aspekte 11-13, ferner umfassend einen Switch Hub, der mit den ersten Nodes des ersten Subnetzwerks und mit den zweiten Nodes des zweiten Subnetzwerks in Kommunikationsverbindung steht und mit dem ersten und zweiten Hub in Kommunikationsverbindung steht, dadurch gekennzeichnet, dass in dem Switch Hub eine Zuordnung der ersten Nodes zu dem ersten Hub und der zweiten Nodes zu dem zweiten Hub hinterlegt ist.
15. Netzwerk nach Aspekt 14, dadurch gekennzeichnet, dass der Switch Hub ausgelegt ist, anhand der Zuordnung Anfragen und/oder Antworten der ersten Nodes an den ersten Hub weiterzuleiten und Anfragen und/oder Antworten der zweiten Nodes an den zweiten Hub weiterzuleiten.
16. Netzwerk nach einem der Aspekte 14 oder 15, dadurch gekennzeichnet, dass die Zuordnung eine Verknüpfung einer nodespezifischen Adresse der jeweiligen Nodes zu einem der jeweiligen Node zugeordneten ersten oder zweiten Hub umfasst.
17. Netzwerk nach einem der Aspekte 11-16, ferner umfassend einen dritten Hub, der mit dem Switch Hub und dem ersten und dem zweiten Hub in Kommunikationsverbindung steht, dadurch gekennzeichnet, dass der Switch Hub ausgelegt ist, Anfragen an den dritten Hub anstelle des ersten oder des zweiten Hubs weiterzuleiten, wenn der erste oder der zweite Hub ausfallen.
18. Netzwerk nach Aspekt 17, dadurch gekennzeichnet, dass der dritte Hub die ersten und zweiten Informationen umfasst.
19. Netzwerk nach einem der Ansprühe 14 - 18, gekennzeichnet durch einen failover Switch Hub als Redundanz zu dem Switch Hub.
20. Netzwerk nach einem der Aspekte 11 - 19, dadurch gekennzeichnet, dass das erste Subnetzwerk die ersten Nodes umfasst, und dass das zweite Subnetzwerk die zweiten Nodes umfasst.
21. Verfahren für ein Netzwerk zur Gebäudeautomation, insbesondere ein BACnet/SC Netzwerk, mit einem ersten Hub umfassend erste Informationen zu ersten Nodes eines ersten Subnetzwerks des Netzwerks, die mit dem ersten Hub in Kommunikationsverbindung stehen,
   dadurch gekennzeichnet, dass
   der erste Hub von einem zweiten Hub zweite Informationen zu zweiten Nodes eines zweites Subnetzwerks in dem Netzwerks umfasst, die mit einem zweiten Hub in Kommunikationsverbindung stehen, empfängt.
22. Verfahren nach Aspekt 22, dadurch gekennzeichnet, dass der erste Hub die ersten Informationen an den zweiten Hub sendet.
23. Verfahren nach Aspekt 21 oder Aspekt 22, gekennzeichnet durch
   Empfangen an dem ersten Hub einer Anfrage von einer ersten Node, sich mit einer zweiten Node zu verbinden, und
   Weiterleiten der Anfrage zu dem zweiten Hub anhand der zweiten Informationen.
24. Verfahren nach Aspekt 23, gekennzeichnet durch
   Weiterleiten, durch den zweiten Hub, der Anfrage an zweite Nodes in dem zweiten Subnetzwerk anhand der zweiten Informationen.
25. Verfahren nach einem der Aspekte 21-24, gekennzeichnet durch
   Empfangen, durch den ersten Hub, einer Anfrage von einer ersten Node sich mit einer weiteren ersten Node oder einer zweiten Node zu verbinden,
   in Antwort auf die Anfrage, Senden, durch den ersten Hub, einer Antwort mit Informationen zu der weiteren ersten Node oder der zweiten Node anhand einer Auswahlregel.
26. Verfahren nach Aspekt 25, dadurch gekennzeichnet, dass die Auswahlregel bestimmt ist durch eine zu der Anfrage vorangegangenen Verbindung der ersten Node mit der weiteren ersten Node oder mit der zweiten Node.
27. Verfahren nach einem der Aspekte 25 oder 26, wobei die Auswahlregel bestimmt ist durch eine vorbestimmte Angabe, ob die erste Node mit der weiteren ersten Node oder der zweiten Node kommunizieren darf.
28. Verfahren nach einem der Aspekte 21-27, wobei das Netzwerk einen Switch Hub umfasst, der mit den ersten Nodes und mit den zweiten Nodes in Kommunikationsverbindung steht und mit dem ersten und zweiten Hub in Kommunikationsverbindung steht,
   wobei das Verfahren umfasst
   Empfangen, durch den Switch Hub, einer Anfrage von einer ersten Node, sich mit einer weiteren ersten Node oder einer zweiten Node zu verbinden, und
   Weiterleiten, durch den Switch Hub, der Anfrage an den ersten Hub anhand einer Zuordnung, welche die ersten Nodes dem ersten Hub zuordnet.
29. Verfahren nach einem der Aspekte 21-28, wobei das Netzwerk einen dritten Hub umfasst, der mit dem ersten und dem zweiten Hub sowie dem Switch Hub in Kommunikationsverbindung steht,
   wobei das Verfahren umfasst
   Empfangen, durch den Switch Hub, einer Anfrage von einer ersten Node, sich mit dem einer weitern ersten Node oder einer zweiten Node zu verbinden;
   Weiterleiten, durch den Switch Hub, der Anfrage an den dritten Hub, falls der erste oder der zweite Hub ausfallen.
30. Computerprogrammprodukt umfassend Befehle, die bei der Ausführung durch eine Datenverarbeitungsvorrichtung, insbesondere einen ersten Hub nach einem der Aspekte 1-10, diese veranlassen, die Verfahrensschritte nach mindestens einem der Aspekte 21-29 auszuführen.
31. Ein Speichermedium, das Befehle speichert, die bei der Ausführung durch eine Datenverarbeitungsvorrichtung, insbesondere einen ersten Hub nach einem der Aspekte 1-10, diese veranlassen, die Verfahrensschritte nach mindestens einem der Aspekte 21-29 auszuführen.

## Patentansprüche

1. Ein erster Hub (1) für ein Netzwerk (100) zur Gebäudeautomation, insbesondere ein BACnet/SC Netzwerk,
wobei der erste Hub (1) erste Informationen zu ersten Nodes (3) eines ersten Subnetzwerks (5) in dem Netzwerk umfasst, die mit dem ersten Hub (1) in Kommunikationsverbindung stehen;
**dadurch gekennzeichnet, dass**
der erste Hub (1) zweite Informationen zu zweiten Nodes (4) eines zweiten Subnetzwerks (6) in dem Netzwerk (100) umfasst, die mit einem zweiten Hub (2) in Kommunikationsverbindung stehen.

2. Erster Hub (1) nach Anspruch 1, **dadurch gekennzeichnet, dass** der erste Hub (1) ausgelegt ist, mit dem zweiten Hub (2) insbesondere unmittelbar zu kommunizieren.

3. Erster Hub (1) nach einem der vorangegangenen Ansprüche, **dadurch gekennzeichnet, dass** der erste Hub (1) ausgelegt ist, von dem zweiten Hub (2) die zweiten Informationen zu empfangen und die ersten Informationen an den zweiten Hub (2) zu senden.

4. Erster Hub (1) nach einem der vorangegangenen Ansprüche, **dadurch gekennzeichnet,**
**dass** die ersten Informationen für jede erste Node (3) des ersten Subnetzwerks (5) eine Zuordnung der jeweiligen ersten Node (3) zu einer für die jeweilige erste Node (3) spezifischen Adresse umfasst und eine Zuordnung der jeweiligen ersten Node (3) zu dem ersten Hub (1) umfasst, und
**dass** die zweiten Informationen für jede zweite Node (4) des zweiten Subnetzwerks (6) eine Zuordnung der jeweiligen zweiten Node (4) zu einer für die jeweilige zweite Node (4) spezifischen Adresse und eine Zuordnung der jeweiligen zweiten Node (4) zu dem zweiten Hub (2) umfasst.

5. Erster Hub (1) nach einem der vorangegangenen Ansprüche, **dadurch gekennzeichnet, dass** der erste Hub (1) ausgelegt ist, von einer ersten Node (3) eine Anfrage, sich mit einer weiteren ersten Node (3) oder einer zweiten Node (4) zu verbinden, zu empfangen und basierend auf einer Auswahlregel eine Antwort auf die Anfrage mit einer Identifikation der weiteren ersten Node (3) oder der zweiten Node (4) an die erste Node (3) zu senden.

6. Erster Hub (1) nach Anspruch 5, **dadurch gekennzeichnet, dass** die Auswahlregel bestimmt ist durch eine zu der Anfrage vorangegangenen Verbindung der ersten Node (3) mit der weiteren ersten Node (3) oder mit der zweiten Node (4) und/oder, dass die Auswahlregel bestimmt ist durch eine vorbestimmte Angabe, ob die erste Node (3) mit der weiteren ersten Node (3) oder der zweiten Node (4) kommunizieren darf.

7. Netzwerk (100) zur Gebäudeautomation, insbesondere ein BACnet/SC Netzwerk, umfassend:
ein erstes Subnetzwerk (5), umfassend
den ersten Hub (1) nach einem der vorangegangenen Ansprüche, der mit den ersten Nodes (3) in Kommunikationsverbindung steht; und
ein zweites Subnetzwerk (6), umfassend
den zweiten Hub (2), der mit den zweiten Nodes (4) in Kommunikationsverbindung steht und die ersten und zweiten Informationen umfasst.

8. Netzwerk (100) nach Anspruch 7, **dadurch gekennzeichnet, dass** der erste Hub (1) und der zweite Hub (2) in unmittelbarer Kommunikationsverbindung stehen, insbesondere über eine bidirektionale direkte Hub-zu-Hub Verbindung (8).

9. Netzwerk (100) nach Ansprüchen 7-8, **dadurch gekennzeichnet, dass** der erste Hub (1) und der zweite Hub (2) ausgelegt sind, die Informationen zu den mit dem jeweiligen ersten oder zweiten Hub (2) in Kommunikationsverbindung stehenden ersten oder zweiten Nodes (4) auszutauschen, insbesondere in zeitlich definierten Abständen und/oder wenn eine Änderung der ersten oder zweiten Nodes (4) eintritt.

10. Netzwerk (100) nach einem der Ansprüche 7-9, ferner umfassend einen Switch Hub (9), der mit den ersten Nodes (3) des ersten Subnetzwerks (5) und mit den zweiten Nodes (4) des zweiten Subnetzwerks (6) in Kommunikationsverbindung steht, und mit dem ersten und zweiten Hub (2) in Kommunikationsverbindung steht, **dadurch gekennzeichnet, dass** in dem Switch Hub (9) eine Zuordnung der ersten Nodes (3) zu dem ersten Hub (1) und der zweiten Nodes (4) zu dem zweiten Hub (2) hinterlegt ist, wobei bevorzugt der Switch Hub (9) ausgelegt ist, anhand der Zuordnung Anfragen und/oder Antworten der ersten Nodes (3) an den ersten Hub (1) weiterzuleiten und Anfragen und/oder Antworten der zweiten Nodes (4) an den zweiten Hub (2) weiterzuleiten.

11. Netzwerk (100) nach Anspruch 10, ferner umfassend einen dritten Hub, der mit dem Switch Hub (9) und dem ersten und dem zweiten Hub (2) in Kommunikationsverbindung steht, **dadurch gekennzeichnet, dass** der Switch Hub ausgelegt ist, Anfragen an den dritten Hub anstelle des ersten oder des zweiten Hubs weiterzuleiten, wenn der erste oder der zweite Hub (2) ausfallen.

12. Verfahren für ein Netzwerk (100) zur Gebäudeautomation, insbesondere ein BACnet/SC Netzwerk, mit einem ersten Hub (1) umfassend erste Informationen zu ersten Nodes (3) eines ersten Subnetzwerks (5) des Netzwerks, die mit dem ersten Hub (1) in Kommunikationsverbindung stehen,
**dadurch gekennzeichnet, dass**
der erste Hub (1) von einem zweiten Hub zweite Informationen zu zweiten Nodes (4) eines zweites Subnetzwerks (6) in dem Netzwerk (100) umfasst, die mit einem zweiten Hub (2) in Kommunikationsverbindung stehen, empfängt.

13. Verfahren nach Anspruch 12, **gekennzeichnet durch**
Empfangen an dem ersten Hub (1) einer Anfrage von einer ersten Node (3), sich mit einer zweiten Node (4) zu verbinden, und
Weiterleiten der Anfrage zu dem zweiten Hub (2) anhand der zweiten Informationen.

14. Computerprogrammprodukt umfassend Befehle, die bei der Ausführung durch eine Datenverarbeitungsvorrichtung, insbesondere einen ersten Hub (1) nach einem der Ansprüche 1-6, diese veranlassen, die Verfahrensschritte nach mindestens einem der Ansprüche 12 oder 13 auszuführen.

15. Ein Speichermedium, das Befehle speichert, die bei der Ausführung durch eine Datenverarbeitungsvorrichtung, insbesondere einen ersten Hub (1) nach einem der Ansprüche 1-6, diese veranlassen, die Verfahrensschritte nach mindestens einem der Ansprüche 12 oder 13 auszuführen.
